Europäisches Patentamt

(19) European Patent Office

Office européen des brevets

(11) Veröffentlichungsnummer: **0 110 334**
**B1**

(12) **EUROPÄISCHE PATENTSCHRIFT**

(45) Veröffentlichungstag der Patentschrift:
03.09.86

(51) Int. Cl.⁴: **F 16 K 11/06,** F 16 K 27/04

(21) Anmeldenummer: **83111794.0**

(22) Anmeldetag: **25.11.83**

(54) **Mischventil.**

(30) Priorität: **29.11.82 DE 3244102**

(43) Veröffentlichungstag der Anmeldung:
**13.06.84 Patentblatt 84/24**

(45) Bekanntmachung des Hinweises auf die Patenterteilung:
**03.09.86 Patentblatt 86/36**

(84) Benannte Vertragsstaaten:
**AT BE CH DE FR GB IT LI NL SE**

(56) Entgegenhaltungen:
**WO-A-79/00134**
**DE-A-1 550 357**
**DE-A-2 602 244**
**DE-A-2 658 023**
**GB-A-2 078 910**

(73) Patentinhaber: **FRIEDRICH GROHE ARMATURENFABRIK GmbH & CO,** Hauptstrasse **137, D-5870 Hemer 1 (DE)**

(72) Erfinder: **Humpert, Jürgen, Oberlinweg 18, D-5870 Hemer (DE)**
Erfinder: **Herring, William Peter, Unter dem Asenberg 30, D-5870 Hemer (DE)**

EP 0 110 334 B1

## Beschreibung

Die Erfindung betrifft ein Mischventil mit den im Oberbegriff des Anspruchs 1 angegebenen Merkmalen. Ein Mischventil dieser Art ist in der DE-A-26 58 023 beschrieben. Die bewegliche Scheibe ist hierbei von einem Formstück mit Hilfe von Stiften im Ventilgehäuse gehaltert. Das Formstück ist dabei mit einem Kopfstück zum Anlenken des Handgriffs versehen, wobei der eine Stift an der dem Handgriff zugekehrten Seite aus dem Formstück hervorragt und in eine Axialnut des Ventilgehäuses faßt, so daß ein axial verschiebbarer Drehpunkt der beweglichen Scheibe gebildet wird. Ferner ist ein Mischventil (GB-A-2 078 910) mit drei Ventilscheiben bekannt, bei dem die bewegliche Scheibe mit einem Ansatz versehen ist, in dem ein den Drehpunkt bildender Stift angeordnet ist.

Der Erfindung liegt die Aufgabe zugrunde, ein gattungsgemäßes Mischventil mit einem Stell- und Führungsglied zu schaffen, mit dem eine feinfühlige und verschleißarme Stellung der beweglichen Scheibe ermöglicht und ein hohes Maß an Stabilität und Festigkeit gewährleistet ist, wobei es mit zur Aufgabe gehört, das Stell- und Führungsglied so auszubilden, daß es kostengünstig herstellbar ist.

Diese Aufgabe wird erfindungsgemäß durch die im kennzeichnenden Teil des Anspruchs 1 angegebenen Merkmale gelöst. Weitere Ausgestaltungen der Erfindung sind in den Ansprüchen 2 bis 4 angegeben.

Die mit der Erfindung erreichten Vorteile bestehen im wesentlichen darin, daß das Stell- und Führungsglied bzw. Mitnahmeglied aus einem z.B. im Stanzverfahren kostengünstig herstellbaren, metallenen Tragkörper gebildet werden kann, an dem die Aufnahme-und Führungselemente z.B. durch Verbundspritzguß angeformt werden können. Durch die Verlagerung des Drehpunkts auf der von der Anlenkung des Handgriffs entferntesten Stelle an dem Mitnahmeglied wird eine feinfühligere Verstellung insbesondere des Mischungsverhältnisses von Kalt- und Warmwasser,ermöglicht. Schließlich wird durch die Ausbildung des Mitnahmegliedes aus einem Verbundwerkstoff, Metall und Kunststoff, es ermöglicht, daß die Gleit- und Führungsglieder aus gut gleitfähigem Kunststoff hergestellt werden können und somit ein relativ verschleißarmer Betrieb und eine hohe Lebensdauer gewährleistet wird.

Ein Ausführungsbeispiel der Erfindung ist in der Zeichnung dargestellt und wird im folgenden näher beschrieben. Es zeigt

Figur 1 ein Mischventil für Sanitärarmaturen, teilweise im Längsschnitt;

Figur 2 das Mischventil gemäß Figur 1 in der Schnittebene II;

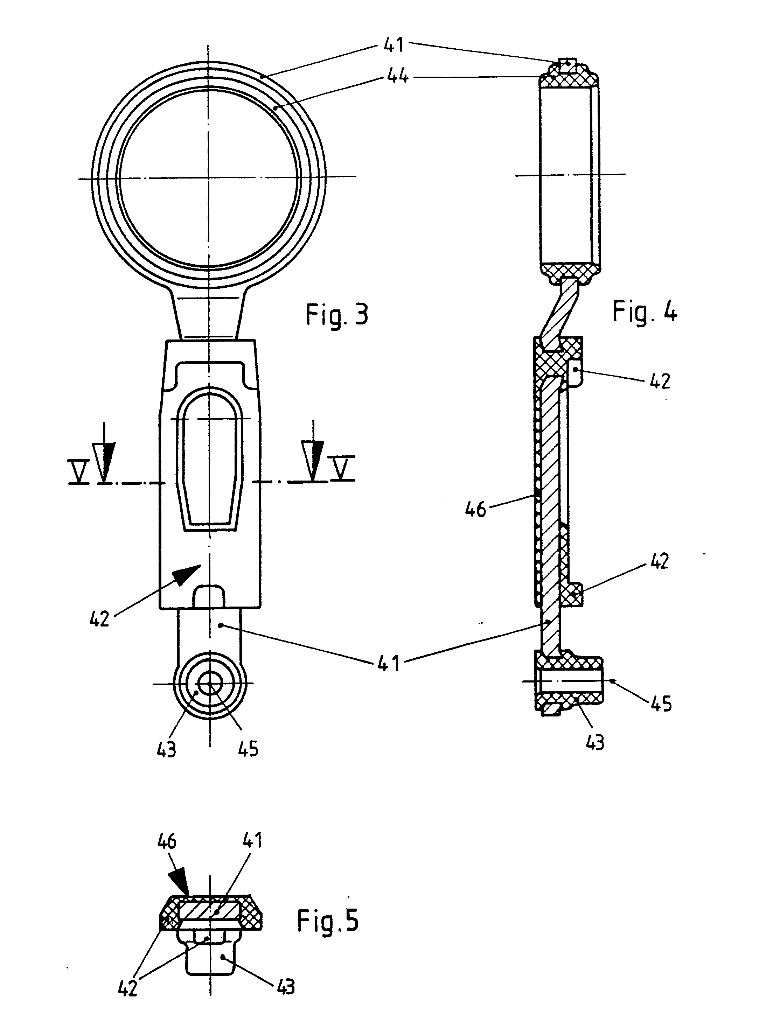

Figur 3 ein Mitnahmeglied in Ansicht,in vergrößertem Maßstab;

Figur 4 das Mitnahmeglied gemäß Figur 3 im Längsschnitt;

Figur 5 das Mitnahmeglied gemäß Figur 3 in der Schnittebene V.

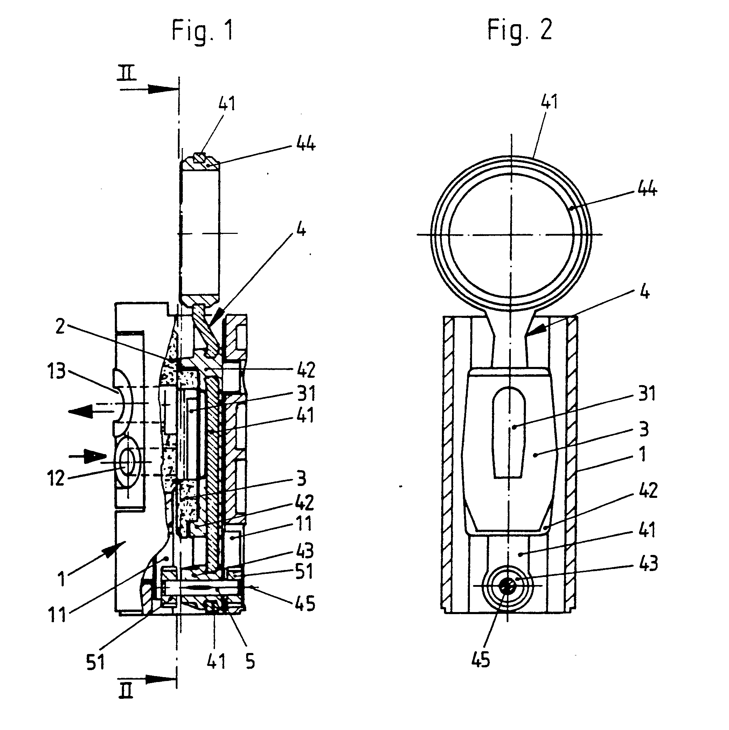

Das in den Figuren 1 und 2 dargestellte Mischventil ist als Ventilkartusche oder Ventileinsatz für Sanitärarmaturen gedacht, wobei der Ventileinsatz alle wesentlichen Ventilelemente beinhaltet, die in einem etwa zylindrischen Ventilgehäuse 1 angeordnet sind. Das Ventilgehäuse 1 kann in eine entsprechende Aufnahmebohrung mit Zu- und Abflußkanälen für Kalt-, Warm- und Mischwasser in einer Sanitärarmatur eingefügt werden.

In dem Ventilgehäuse 1 ist eine unbewegliche Scheibe 2 angeordnet und mittels Einlaßöffnungen 12 für Kalt- und Warmwasser und einer Auslaßöffnung 13 für das Mischwasser mit entsprechenden Kanälen in der Sanitärarmatur verbunden. An der parallel zur Mittelachse angeordneten Scheibe 2 ist eine bewegliche Ventilscheibe 3 mit einem Umlenk- und Mischkanal 31 angelagert, derart, daß durch ein Verschieben parallel zur Mittelachse die Gesamtdurchflußmenge und durch ein Verschwenken um einen Drehpunkt 45 das Mischungsverhältnis von Kalt- und Warmwasser bzw. die Mischwassertemperatur einstellbar ist.

Die bewegliche Scheibe 3 ist von einem Mitnahmeglied 4 aufgenommen und gehaltert. Das Mitnahmeglied 4 ist von einem Tragkörper 41 aus Metall geformt, in dem Aufnahme- und Führungselemente 42, 43, 44 aus Kunststoff angespritzt sind. Das Aufnahme- und Führungselement 42 ist dabei durch eine oder mehrere perforationen in dem Tragkörper 41 hindurchgespritz, so daß einerseits eine Aufnahme zur Fassung der beweglichen Scheibe 3 und andererseits eine Gleitfläche 46 formschlüssig und unlösbar an dem Mitnahmeglied 4 ausgebildet ist. Zur Anlenkung des Griffstücks ist an dem einen Endbereich des Tragkörpers 41 in einem Auge eine Buchse als Aufnahmeelement 44 eingespritzt, während in dem gegenüberliegenden Endbereich des Tragkörpers im Drehpunkt 45 ein weiteres buchsenförmiges Aufnahmeelement 43 in einer Bohrung des Tragkörpers eingespritzt ist.

In dem Aufnahmeelement 43 ist im Drehpunkt 45 eine Achse 5 fest eingelagert, wie insbesondere Figur 1 der Zeichnung zu entnehmen ist, auf deren vorstehenden zylindrischen Enden jeweils ein Gleitstein 51 drehbeweglich gelagert ist. Zur Axialverschiebung des Mitnahmegliedes 4 sind die Gleitsteine 51 andererseits in Längsschlitze 11 im Gehäuse 1 parallel zur Mittellinie verschiebbar gelagert, so daß eine verschleißarme, langlebige Drehpunktlagerung gewährleistet ist.

## Patentansprüche

1. Mischventil insbesondere für Sanitärarmaturen mit einem Handgriff und zwei mit Durchtrittsöffnungen für Kalt-, Warm- und Mischwasser versehenen, in einem Ventilgehäuse (1) parallel zur Mittelachse des Ventilgehäuses aufeinander gelagerten Scheiben (2, 3), wovon die eine Scheibe (2) unbeweglich fixiert und die andere Scheibe (3) verschiebbar mit einem Mitnahmeglied (4) gehaltert ist, welches mit dem Handgriff verbunden ist und für die Führung und Halterung Aufnahmeelemente (42, 43, 44) aufweist, so daß mit der beweglichen Scheibe (3) durch Verschiebung parallel zur Mittelachse die Gesamtdurchflußmenge und mit einem Verschwenken um einen axial entlang der Mittelachse verschiebbaren Drehpunkt (45) das Mischungsverhältnis reguliert wird, dadurch gekennzeichnet, daß das Mitnahmeglied (4) aus einem metallenen Tragkörper (41) und aus Kunststoff, z.B. im Verbundspritzguß angeformten Aufnahmeelementen (42, 43, 44) besteht, wobei ein erstes Aufnahmeelement (42) zur Aufnahme der beweglichen Scheibe (3), ein zweites Aufnahmeelement (43) zur Führung des Mitnahmegliedes (4) um eine Drehachse (5) und ein drittes Aufnahmeelement (44) zur Anlenkung des Handgriffs dient, und daß der Drehpunkt (45) des Mitnahmegliedes (4) an dem der Handgriffanlenkung gegenüberliegenden Endbereich außerhalb der beweglichen Scheibe (3) ausgebildet ist.

2. Mischventil nach Anspruch 1, dadurch gekennzeichnet, daß der Drehpunkt (45) von einer im Aufnahmeelement (43) gehalterten zylindrischen Achse (5) gebildet ist, auf deren Endbereiche Gleitsteine (51) gelagert sind, die in entsprechenden Längsschlitzen (11) im Gehäuse (1) geführt sind.

3. Mischventil nach Anspruch 1 und/oder 2, dadurch gekennzeichnet, daß die Gleitflächen des Mitnahmegliedes (4) aus gut gleitfähigem Kunststoff bestehen.

4. Mischventil nach wenigstens einem der Ansprüche 1 bis 3, dadurch gekennzeichnet, daß die Aufnahmeelemente (42, 43, 44) im Bereich von Durchbrüchen im Tragkörper (41) ausgebildet sind.

**Claims**

1. Mixing valve, especially for sanitary fittings, having a handle and two discs (2, 3) mounted one on top of the other in a valve housing (1) parallel to the central axis of the valve housing and provided with openings for cold, hot and mixed water, of which one disc (2) is immovably fixed and the other disc (3) is held, in such a manner that it is displaceable, by a carrier member (4) which is connected to the handle and for the purpose of guiding and holding has retaining elements (42, 43, 44), with the result that the total flow rate is regulated using the movable disc (3) by displacing it parallel to the central axis and the mixing ratio is regulated by rotating the disc about a fulcrum (45) that is axially displaceable along the central axis, characterised in that the carrier member (4) comprises a metal carrier (41) and retaining elements (42, 43, 44) made of plastics material that are, for example, moulded on by compound injection moulding, a first retaining element (42) serving to retain the movable disc (3), a second retaining element (43) to guide the carrier member (4) about an axis (5) of rotation and a third retaining element (44) serving for the connection of the handle, and that the fulcrum (45) of the carrier member (4) is formed outside the movable disc (3) in the end region remote from the handle connection.

2. Mixing valve according to claim 1, characterised in that the fulcrum (45) is formed by a cylindrical axle (5) held in the retaining element (43), at the end regions of which axle sliding blocks (51) are mounted, which are guided in corresponding longitudinal slots (11) in the housing (1).

3. Mixing valve according to claim 1 and/or 2, characterised in that the sliding surfaces of the carrier member (4) are made of plastics material that slides readily.

4. Mixing valve according to at least one of claims 1 to 3, characterised in that the retaining elements (42, 43, 44) are formed in the region of openings in the carrier (41).

**Revendications**

1°) Boisseau-mélangeur notamment pour robineterie, comportant une poignée et deux plaques (2, 3) munies de passages pour l'eau froide, l'eau chaude et l'eau mélangée, ces plaques étant montées l'une sur l'autre parallèlement à l'axe du boîtier du boisseau et à l'intérieur de ce boîtier (1), l'une des plaques (2) étant bloquée et l'autre plaque (2) étant maintenue de façon à coulisser avec un organe d'entraînement (4) relié à la poignée et qui comporte des éléments de réception (42, 43, 44) pour le guidage et la fixation de façon que par la plaquette mobile (3), par translation parallèlement à l'axe, on règle le débit total et par basculement autour d'un point de rotation (45) coulissant axialement le long de l'axe médian, on règle le rapport du mélange, caractérisé en ce que l'organe d'entraînement (4) se compose d'un corps de support (41) métallique et d'éléments de réception (42, 43, 44) en matière synthétique, par exemple réalisés par une injection composite, un premier élément de réception (42) servant à recevoir la plaque mobile (3), un second élément de réception (43) servant à guider l'organe d'entraînement (4) autour d'un axe de rotation (5) et un troisième élément de réception (44) servant à l'articulation de la poignée et en ce que le point de rotation (45) de l'organe d'entraînement (4) est réalisé dans la zone d'extrémité opposée à l'articulation de poignée, en dehors de la plaque mobile (3).

2°) Boisseau-mélangeur selon la revendication 1, caractérisé en ce que le point de rotation (45) est formé par un axe cylindrique (5) maintenu dans un élément de réception (43) et dont les zones d extrémité comportent des galets de glissement (51) guidés dans des fentes longitudinales (11), du boîtier (1).

3°) Boisseau-mélangeur selon la revendication 1 et/ou 2, caractérisé en ce que les surfaces de glissement de l'organe d'entraînement (4) sont en une matière synthétique à bonne caractéristique de glissement.

4°) Boisseau-mélangeur selon au moins l'une quelconque des revendications 1 à 3, caractérisé en ce que les éléments re réception (42, 43, 44) sont réalisés au niveau des passages dans le corps de support (412).

Fig. 1

Fig. 2

Fig. 3

Fig. 4

Fig. 5